(19) Europäisches Patentamt
European Patent Office
Office européen des brevets

(11) Veröffentlichungsnummer: **0 008 327**
**B1**

(12) # EUROPÄISCHE PATENTSCHRIFT

(45) Veröffentlichungstag der Patentschrift: **24.02.82**

(21) Anmeldenummer: **79101999.5**

(22) Anmeldetag: **18.06.79**

(51) Int. Cl.³: **C 10 M 1/18,**
C 08 F 287/00

(54) **Schmieröladditive und deren Herstellung.**

(30) Priorität: **11.08.78 DE 2835192**

(43) Veröffentlichungstag der Anmeldung:
**05.03.80 Patentblatt 80/5**

(45) Bekanntmachung des Hinweises auf die Patenterteilung:
**24.02.82 Patentblatt 82/8**

(84) Benannte Vertragsstaaten:
**BE FR GB NL**

(56) Entgegenhaltungen:
**DE - A - 2 156 122**
**DE - A - 2 554 117**
**US - A - 3 359 345**
**US - A - 3 459 700**

(73) Patentinhaber: **Röhm GmbH**
**Kirschenallee**
**D-6100 Darmstadt (DE)**

(72) Erfinder: **Benda, Rainer, Dr.**
**Ringstrasse 124**
**D-6101 Rossdorf (DE)**
Erfinder: **Knöll, Helmut**
**Brandauer Klinger 16**
**D-6147 Lautertal 1 (DE)**
Erfinder: **Neudörfl, Peter, Dr.**
**Kesselhutweg 10**
**D-6100 Da-Neu-Kranichstein (DE)**
Erfinder: **Pennewiss, Horst, Dr.**
**Meissnerweg 53**
**D-6100 Da-Neu-Kranichstein (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 008 327 B1

# Schmieröladditive und deren Herstellung

Die Erfindung betrifft ein Verfahren zur Herstellung von Schmieröladditiven auf der Grundlage von Polyalkylmethacrylaten (PAMA) und hydrierten Blockcopolymerisaten, aufgebaut aus einem konjugierten Dien mit 4 bis 6 Kohlenstoffatomen, insbesondere 1,3-Butadien bzw. Isopren und Styrol (ISB).

Die Technik hat sich mit Erfolg bemüht, Schmieröladditive zu entwickeln, die den Viskositätsindex des Schmieröls verbessern und zusätzlich gute Verdickungswirkung, Dispergier- und Detergenzwirkung bei guter Verschleißschutzwirkung besitzen. Weitere kritische Punkte sind die Wirkung auf den Stockpunkt, sowie die Scherstabilität der Schmierölzusätze. Gleichzeitig müssen die Mischungen mit den Mineralölen stabile Systeme darstellen.

In der DE-OS 26 34 033 werden Pfropfcopolymerisate empfohlen, die durch Pfropfung von stickstoffhaltigen Monomeren auf ein polymeres Substrat hergestellt werden. Die polymeren Substrate können beispielsweise Copolymerisate aus Äthylen und Propylen, Copolymerisate oder Terpolymerisate aus Äthylen/Propylen und einem Dien, hydrierte Styrolbutadien-Copolymerisate une hydrierte Styrolisopren-Copolymerisate, ataktisches Polypropylen oder Polyäthylen niedriger Dichte sein.

Gegenstand der DE-OS 25 54 117 sind Schmierölzusätze, die durch Aufpfropfen polymerisationsfähiger Vinylmonomerer auf ein hydriertes Polymer oder Copolymer vom Typ der Homopolymere aus konjugierten Dienen mit 4 bis 6 Kohlenstoffatomen bzw. hydrierten Copolymeren aus mindestens zwei konjugierten Dienen mit 4 bis 6 Kohlenstoffatomen oder der hydrierten Copolymeren eines konjugierten Diens mit 4 bis 6 Kohlenstoffatomen und des Styrols gebildet werden. Als polymerisierbare Vinylderivate werden neben Vinylacetat, verschiedenen (Meth)acrylsäureestern, Diäthylaminoäthylacrylat auch N-Vinylpyrrolidon, N-Vinylimidazol und N-Vinylpyridin genannt. Ausweislich der Beispiele wird die Pfropfung in einer ca. 10% igen Lösung des Polymeren in Mineralöl vorgenommen. Die zu pfropfenden Monomeren können dabei allein oder im Gemisch, z.B. als Mischungen des N-Vinylimidazols oder des N-Vinylpyrrolidons mit den (Meth)acrylaten angewendet werden.

Die Schmierölzusätze des Standes der Technik können jedoch die technischen Anforderungen nicht völlig befriedigen. Beispielsweise läßt die Pfropfausbeute zu wünschen übrig. Daher ist deren Dispergier-/Detergenzwirkung gegenüber den stickstofffreien Basispolymerisaten in Otto-Motoren und heiß- und/oder aufgeladenen Diesel-Motoren nicht wesentlich verbessert.

Es wurde nun gefunden, daß man Schmieröladditive mit hervorragenden Eigenschaften erhält, wenn man in Gegenwart eines Basispolymerisats, bestehend aus hydrierten Blockcopolymerisaten aus konjugierten Dienen mit 4 bis 6 Kohlenstoffatomen einerseits und Styrol andererseits in Mineralöl in einer ersten Stufe Styrol und/oder Alkyl-ester der (Meth)acrylsäure polymerisiert und in einer zweiten Stufe hydrophobierende Vinylester und/order polymerisierbare heterocyclische Monomere pfropfend aufpolymerisiert.

Die erfindunsgemäß als Basis-polymerisat zu verwendenden hydrierten Blockpolymerisate sind z.B. aus der DE-OS 21 56 122 bekannt. Vorzugsweise finden hydrierte Blockcopolymerisate aus Butadien oder 2-Methyl-1,3-butadien (Isopren) und Styrol Anwendung.

Die hydrierten Blockcopolymerisate haben in der Regel ein mittleres Molekulargewicht von $1 \cdot 10^4$ bis $3 \cdot 10^5$, vorzugsweise $3 \cdot 10^4$ bis $1 \cdot 10^5$, und sind im allgemeinen hydriert bis zu einem Restgehalt an olefinischen Doppelbindungen von $<15\%$, im wesentlichen $<5\%$.

Die Herstellung der Blockcopolymerisate kann beispielsweise durch anionische Polymerisation in aliphatischen bzw. cycloaliphatischen Lösungsmitteln unter Verwendung von Alkalimetallen und ihren organischen Verbindungen erfolgen.

Die Hydrierung kann ebenso in bekannter Weise vorgenommen werden, beispielsweise durch katalytische Hydrierung über Raney-Nickel, Platin oder Palladium auf Kohlenstoff usw., oder durch Reduktionsmittel auf der Basis von Organometallverbindungen, insbesonder Hydriden.

Die in erster Stufe zu polymerisierenden Alkylester der (Meth)acrylsäure umfassen Verbindungen der allgemeinen Formel I

$$CH_2{=}\overset{\displaystyle R_1}{\overset{|}{C}}{-}COOR_2, \qquad \text{I}$$

worin $R_1$ Wasserstoff oder Methyl, $R_2$ für einen Alkyrest mit 1 bis 22 Kohlenstoffatomen, vorzugsweise den Verbindungen der allgemeinen Formel I, worin $R_1$ für Methyl und $R_2$ für einen Alkylrest mit 8 bis 18 Kohlenstoffatomen steht. Besonders genannt seien Decyl-, Lauryl-, Palmityl-, Cetyl- und Stearyl-Reste, bzw. Gemische derselben.

Gleichzeitig mit den Alkylestern der (Meth)acrylsäure kann auch Styrol bzw. $\alpha$-Methylstyrol copolymerisiert werden. Das Verhältnis Styrol bzw. $\alpha$-Methylstyrol zu den Alkylestern der (Meth)acrylsäure kann dabei 1:1,5 bis 1:9 betragen. In erster Stufe können neben den (Meth)acrylsäureestern der allgemeinen Formel I gegebenenfalls noch durch Aminogruppen substituierte Ester der allgemeinen Formel III

$$CH_2{=}C(R'_1){-}COO(CH_2)_nNR_3R_4, \qquad III$$

worin $R'_1$ für Wasserstoff oder Methyl, $R_3$ und $R_4$ für Wasserstoff oder einen Alkylrest mit 1 bis 4 Kohlenstoffatomen und n für eine Zahl von 2 bis 4 steht, vorzugsweise solche, woren $R_3$ und $R_4$ für Methyl oder Äthyl und n für 2 steht, eingesetzt werden.

Dabei kann das Gewichtsverhältnis zwischen den Monomeren der allgemeinen Formeln I und III 1:0,01 bis 1:0,2, vorzugsweise 1:0,1 betragen. Bei den folgenden quantitativen Angaben wurden die Verbindungen der allgemeinen Formeln I und III gewichtsmäßig zusammengefaßt.

In zweiter Stufe können neben den polymerisierbaren, heterocyclischen Monomeren gegebenenfalls noch hydrophobierende Vinylester der allgemeinen Formel II

$$CH_2{=}CH{-}O{-}C({=}O){-}R_5 \qquad II$$

worin $R_5$ einen Alkyrest mit 6 bis 20 C-Atomen bedeutet, vorzugsweise worin $R_5$ für einen starkverzweigten Alkylrest mit $C_9$, $C_{10}$ oder $C_{11}$-Seitenketten bedeutet und mit der Maßgabe, daß die Carboxylgruppe an einem tertiären Kohlenstoffatom sitzt, eingesetzt werden.

Als Vertreter der Verbindungen der allgemeinen Formel II seien die von den als Versatic acids® bezeichneten Handelsprodukten abgeleiteten Ester besonders genannt.

Das Gewichtsverhältnis der Monomeren der allgemeinen Formel II zu den polymerisierbaren heterocyclischen Monomeren kann z.B. 1:0,1 bis 1:3 betragen.

Die polymerisierbaren heterocyclischen Verbindungen, die erfindungsgemäß in zweiter Stufe polymerisiert werden, umfassen in erster Linie N-Vinylpyrrolidon-2 und N-Vinylimidazol, bzw. ein Gemisch derselben, etwa im Gewichtsverhältnis 1:1 bis 9:1, vorzugsweise ca. 3:1.

Das Basispolymerisat macht dabei im allgemeinen 5—50 Gew.-%, die in erster Stufe zu polymerisierenden Monomeren der oben genannten allgemeinen Formel bzw. Styrol und $\alpha$-Methylstryol machen 49,5—85 Gew.-% aus. Die anschließend in zweiter Stufe aufzupfropfenden polymerisierbaren heterocyclischen Monomeren betragen 0,5—10 Gew.-%, bezogen auf das Gesamtpolymerisat. Letztere umfassen in erste Linie N-Vinylpyrrolidon-2 und/oder N-Vinylimidazol.

Vorzugsweise erfolgt das Aufpolymerisieren in erster und in zweiter Stufe bereits in einem für die Verwendung als Schmiermittel geeigneten Medium, beispielsweise in einem Mineralöl zweckmäßig mit einer Viskosität von 3—6 $mm^2/s$ bei 100°C.

Die Polymerisationsschritte können technisch in Anlehnung an die bereits bekannten Verfahren durchgeführt werden (vgl. z.B. J. Pavlinec et. al. J. Polymer Sc., Part C, No. 16, S. 1113—1123 (1967).

Die Polymerisation kann z.B. radikalisch, unter Verwendung geeigneter Polymerisationsinitiatoren wie z.B. Perverbindungen, speziell Persäureester, durchgeführt werden. Die jeweils ausreichende Menge an Initiator ist in der Technik bekannt.

Zur Durchführung des erfindungsgemäßen Verfahrens kann zunächst in einer der üblichen Apparaturen eine Mischung aus dem hydrierten Blockcopolymerisat, gegebenenfalls Styrol und ein gewisser Anteil der in erster Stufe zu polymerisierenden Monomeren, beispielsweise ca. 1/5 der Monomeren in dem für das betreffende Polymerisationsverfahren geeigneten Lösungsmittelsystem, vorzugsweise in einem für die Verwendung als Schmiermittel geeigneten Medium wie Mineralöl, zusammen mit einem Teil des Initiators vorgegeben, werden, und nach dem Lösen kann unter Erwärmen des Ansatzes auf Reaktionstemperatur, im allgemeinen oberhalb 80°C, etwa bei 90°C ein Gemisch der restlichen, in erster Stufe zu polymerisierenden Monomeren plus Initiator über einen gewissen Zeitraum, der von der Größe des Ansatzes beeinflußt ist, beispielsweise über 3—4 Stunden unter Rühren gleichmäßig zudosiert werden. Eine gewisse Zeit nach Beendigung des Zufosierens, etwa zwei Stunden später, kann noch eine gewisse Initiatormenge nachgefüttert werden. Die vorgegebene Menge an Initiator, die mit den Monomeren zudosierte und die nachgefütterte Menge kann im ungefähren Verhältnis 2:3:1 stehen.

Nach einer Gesamtpolymerisationsdauer von im allgemeinen unter 10 Stunden, beispielsweise ca. 8 Stunden werden die in zweiter Stufe zu polymerisierenden Monomeren wie die polymerisationsfähige heterocyclische Verbindung bzw. ein Gemisch derselben, sowie gegebenenfalls der hydrophobierende Vinylester der allgemeinen Formel III und eine ausreichende Menge an Initiator, der von dem in erster Stufe verwendeten in der Regel verschieden sein wird, zugegeben.

Die Pfropfung erfolgt dann bei gegenüber der ersten Stufe erhöhter Temperatur, beispielsweise bei ca. 130°C, wobei in vorzugsweise regelmäßigen Zeitabständen, etwa jede Stunde, insgesamt etwa 4 mal, weitere Mengen an Initiator zugefüttert werden Können, beispielsweise jeweils die Hälfte der zunächst eingesetzten Initiatormenge. Der Pfropfungsvorgang kann in der Regel etwa zwei Stunden nach Zugabe des letzten Initiators als abgeschlossen betrachtet werden.

Die erfindungsgemäß hergestellten Schmieröladditive erweisen sich als sehr gut verträglich mit den verschiedensten mineralischen Schmierölen, wie z.B. den hydroraffinierten oder in Lösungsmitteln

raffinierten Ölen sowie den verschiedensten synthetischen Schmierölen und bi en mit diesen und den Mineralölen stabile Lösungs-Systeme. Sie zeichnen sich neben ihrer VI-verbessernden Wirkung, insbesondere durch ein günstiges Tieftemperaturviskositätsverhalten, durch eine ausgesprochene Dispergier- bzw. Detergenzwirkung, und besonders durch eine günstige Relation: Verdickungswirkung zu Scherstabilität aus. Hervorzuheben ist ferner die gute Stockpunktwirkung der erfindungsgemäß hergestellten Additive.

Die folgenden Verfahrensbeispiele dienen zur Erläuterung der Erfindung, sollen aber den nachgesuchten Schutz in keiner Weise einschränken.

Beispiel 1

In einem 1,5 1 4-Halsrundkolben mit Rührer, Thermometer, Rückflußkühler und Dosierleitung wird folgende Mischung vorgelegt:

574,5 g Mineralöl ($\eta_{100°C} = 5{,}3$ mm²/s)
63,8 g hydriertes Isopren-Styrol-Blockcopolymerisat (46% Styrol)
28,0 g Styrol
42,0 g Methacrylsäureester eines $C_{12-18}$-Alkoholgemisches
1,12 g tert.-Butylperoctoat.

Nach Lösen der Komponenten wird bei 90°C nach-stehendes Gemisch über einen Zeitraum von 3,5 Stunden gleichmäßig zudosiert:

116,6 g Styrol
174,9 g Methacrylsäureester eines $C_{12-18}$Alkoholgemisches
1,75 g tert.-Butylperoctoat.

2 Stunden nach Zulaufende wird mit 0,58 g tert.- Butylperotoat nachgefüttert. Gesamtpoiymerisationszeit 8 h. Danach wird folgendes Gemisch zugegeben:

13,2 g Vinylpyrrolidon
4,4 g Vinylimidazol
21,9 g Vinylester einer hochverzweigten $C_{10}$_Monocarbonsäure
1,2 g tert.-Butylperbenzoat.

Die Pfropfung erfolgt dann bei 130°C, wobei jeweils nach 1, 2, 3 und 4 Stunden weitere 0,56 g tert.-Butylperbenzoat nachgefüttert werden. Nach weiteren 2 Stunden ist die Pfropfung beendet.

Die erhaltene Lösung ist 43,6%ig in Mineralöl und leicht trüb. Eine 10%ige Verdünnung im gleichen Grundöl von 5,3 mm²/s (100°C) besitzt eine Viskosität von 13,93 mm²/s bei 100°C und einen Scherstabilitätsindex*) von 19. Der Stickstoffgehalt des isolierten Polymerisats beträgt 0,38%.

Beispiel 2

Polymerisationsverfahren wie in Beispiel 1.

Vorlage:
550,0 g Mineralöl ($\eta_{100°C} = 5{,}3$ mm²/s)
137,5 g hydriertes Butadien-Styrol-blockcopolymerisat (55% Styrol)
71,9 g Methacrylsäureester eines $C_{12-18}$-Alkoholgemisches
3,8 g Methylmethacrylat
0,92 g tert.-Butylperoctoat

Zulauf:
231,6 g Methacrylsäureester eines $C_{12-18}$-Alkoholgemisches
12,2 g Methylmethacrylat
1,4 g tert.-Butylperoctoat.

Pfropfung:
14,2 g Vinylpyrrolidon
4,7 g Vinylimidazol
1,2 g tert.-Butylperbenzoat

---

*) Scherstabilitätsindex = Verlust an Verdickungswirkung in % bei Scherstabilitätsprüfung nach DIN 51 382

Polymerisatgehalt der Lösung: 46.5%
Viskosität (100°C/10% ig): 14,1 $mm^2/s$
Scherstabilitätsindex*): 12
Stickstoffgehalt d. isol. Polymerisats: 0,36%.

Beispiel 3

Polymerisationsverfahren wie in Beispiel 1.

Vorlage:
574,5 g Mineralöl (5,3 $mm^2/s$ b. 100°C)
63,8 g hydriertes Isopren-Styrol-Blockpolymerisat (46% Styrol)
63,2 g Methacrylsäureester eines $C_{12-18}$-Alkoholgemisches
3,3 g 2-Dimethylaminoäthylmethacrylat
5,5 g Methylmethacrylat
1,12 g tert.-Butylperoctoat.

Zulauf:
268,2 g Methacrylsäureester eines $C_{12-18}$-Alkoholgemisches
8,75 g 2-Dimethylaminoäthylmethacrylat
14,6 g Methylmethacrylat
1,75 g tert.-Butylperoctoat.

Pfropfung:
13,2 g Vinylpyrrolidon
4,4 g Vinylimidazol
21,9 g Vinylester einer hochverzweigten $C_{10}$-Monocarbonsäure
1,2 g tert.-Butylperbenzoat

Polymerisatgehalt der Lösung: 43,5%
Viskosität (100°C/10% ig): 12,8 $mm^2/s$
Scherstabilitätsindex*): 13
Stickstoffgehalt d. isol. Polymerisats: 0,65%.

**Patentansprüche**

1. Verfahren zur Herstellung von schmieröladditiven auf der Basis eines hydrierten Blockcopolymerisats aus konjugierten Dienen mit 4 bis 6 Kohlenstoffatomen und Styrol, auf das zusätzlich Styrol und/oder ein Alkylester der Acryl-/Methacrylsäure, hydrophobierende Vinylester und/oder polymerisationsfähige heterocyclische Monomere polymerisiert wurden, dadurch gekennzeichnet, daß man in einer ersten Stufe in Gegenwart des hydrierten Blockcopolymerisats aus konjugierten Dienen mit 4 bis 6 Kohlenstoffatomen und gegebenenfalls Styrol Verbindungen der allgemeinen Formel I

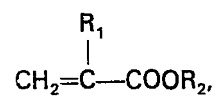 I

worin $R_1$ für Wasserstoff oder Methyl, $R_2$ für einen Alkylrest mit 1 bis 22 Kohlenstoffatomen polymerisiert und anschließend in einer zweiten Stufe polymerisationsfähige, heterocyclische Monomere und gegebenenfalls hydrophobierende Vinylester der allgemeinen Formel II

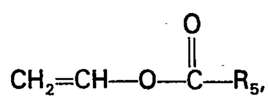 II

worin $R_5$ einen Alkylrest mit 6 bis 20 Kohlenstoffatomen bedeutet, pfropfend aufpolymerisiert, wobei das Gewichtsverhältnis des hydrierten Blockcopolymerisats zu den in der ersten Stufe zu poly merisierenden Verbindungen der allgemeinen Formel I und dem gegebenenfalls zu polymerisierenden Styrol und zu den in der zweiten Stufe pfropfend aufzupolymerisierenden polymerisationsfähigen heterocyclischen Monomeren und den gegebenenfalls pfropfend aufzupolymerisierenden hydrophobierenden Vinylester der allgemeinen Formel II 5 bis 50 Gew.-% zu 49,5 bis 85 Gew.-% zu 0,5 bis 10 Gew.-%, bezogen auf das Gesamtpolymerisat, beträgt.

*) Scherstabilitätsindex = Verlust an Verdickungswirkung in % bei Scherstabilitätsprüfung nach DIN 51 382.

2. Verfahren gemäß Anspruch 1, dadurch gekennzeichnet, daß in erster Stufe neben den Verbindungen der allgemeinen Formel I auch durch Aminogruppen substituierte Alkylester der (Meth)acrylsäure und/oder polymerisationsfähige heterocyclische Monomere polymerisiert werden.

3. Verfahren gemäß Anspruch 2, dadurch gekennzeichnet, daß die in erster Stufe neben den Alkylestern der (Meth)acrylsäure polymerisierten, durch Aminogruppen Substituierten Alkylester die allgemeine Formel III

$$CH_2{=}\overset{\overset{R'_1}{|}}{C}{-}COO{-}(CH_2)_nNR_3R_4, \qquad III$$

worin $R'_1$ für Wasserstoff oder Methyl, $R_3$ und $R_4$ für Wasserstoff oder einen Alkylrest mit bis 4 Kohlenstoffatomen und n für eine Zahl von 2 bis 4 steht, besitzen.

4. Verfahren gemäß Anspruch 3, dadurch gekennzeichnet, daß in der Verbindung der Allgemeinen Formel II $R_3$ und $R_4$ für Methyl oder Äthyl und n für 2 steht.

5. Verfahren gemäß Anspruch 1, dadurch gekennzeichnet, daß als die in zweiter Stufe pfropfend aufpolymerisierten polymerisationsfähigen heterocyclischen Monomeren N-Vinylpyrrolidon-2 und/oder N-Vinylimidazol verwendet werden.

**Revendications**

1. Procédé pour la préparation d'additifs pour huiles lubrifiantes à base d'un copolymère séquencé hydrogéné de diènes conjugués contenant 4 à 6 atomes de carbone et de styrène, sur lequel ont été polymérisés du styrène supplémentaire et/ou un ester alcoylique de l'acide acrylique/méthacrylique, des esters vinyliques à effet hydrophobe et/ou des monomères hétérocycliques polymérisables, caractérisé en ce qu'en un premier temps, on polymérise, en présence du copolymère séquencé hydrogéné de diènes conjugués contenant 4 à 6 atomes de carbone et éventuellement de styrène, des composés de formule générale I

$$CH_2{=}\overset{\overset{R_1}{|}}{C}{-}COOR_2 \qquad (I)$$

dans laquelle $R_1$ est mis pour un hydrogène ou un méthyle, $R_2$ pour un radical alcoyle à 1—22 atomes de carbone, puis, dans un second temps, on greffe par polymérisation des monomères hétérocycliques polymérisables et, le cas échéant, des esters vinyliques à effet hydrophobe de formule générale II

$$CH_2{=}CH{-}O{-}\overset{\overset{O}{\|}}{C}{-}R_5 \qquad (II)$$

dans laquelle $R_5$ représente un radical alcoyle à 6—20 atomes de carbone, le rapport pondéral du copolymère séquencé hydrogéné aux composés de formule générale I a polymériser dans le premier temps et au styrène à polymériser éventuellement, ainsi qu'aux monomères hétérocycliques polymérisables à greffer par polymérisation dans le second temps et aux esters vinyliques à effet hydrophobe de formule générale II à greffer éventuellement par polymérisation, se situant dans la gamme 5—50:49,5—85:0,5—10% en poids, par rapport au polymère total.

2. Procédé selon la revendication 1, caractérisé en ce que dans le premier temps, outre les composés de formule générale I, on polymérise aussi des esters alcoyliques de l'acide (méth)acrylique substitués par des groupes amino et/ou des monomères hétérocycliques polymérisables.

3. Procédé selon la revendication 2, caractérisé en ce que les esters alcoyliques substitués par des groupes amino, qui sont polymérisés dans le premier temps, en plus des esters alcoyliques de l'acide (méth)acrylique, répondent à la formule générale III

$$CH_2{=}\overset{\overset{R_1'}{|}}{C}{-}COO{-}(CH_2)_nNR_3R_4 \qquad (III)$$

dans laquelle $R_1'$ est mis pour un hydrogène ou un méthyle, $R_3$ et $R_4$ pour un hydrogène ou un radical alcoyl à 1—4 atomes de carbone et n est un nombre de 2 à 4.

4. Procédé selon la revendication 3, caractérisé en ce que, dans le composé de formule générale III, $R_3$ et $R_4$ représentent chacun un méthyle ou un éthyle et n a la valeur 2.

5. Procédé selon la revendication 1, caractérisé en ce qu'on utilise la N-vinyl-pyrrolidone-2 et/ou le N-vinyl-imidazole en tant que monomères hétérocycliques polymérisables, greffés par polymérisation dans le second temps.

## Claims

1. Process for preparing lubricating oil additives based on a hydrogenated block copolymer consisting of conjugated dienes with 4 to 6 carbon atoms and styrene, on to which styrene and/or an alkyl ester of acrylic or methacrylic acid, vinyl esters with a hydrophobic effect and/or polymerisable heterocyclic monomers have additionally been polymerised, characterised in that, in a first stage, compounds of general formula I

$$\begin{array}{c} R_1 \\ | \\ CH_2{=}C{-}COOR_2 \end{array} \qquad (I)$$

wherein $R_1$ represents hydrogen or methyl and $R_2$ represents an alkyl group with 1 to 22 carbon atoms, are polymerised in the presence of the hydrogenated block copolymer consisting of conjugated dienes with 4 to 6 carbon atoms and possibly styrene, and then, in a second stage, polymerisable heterocyclic monomers and optionally vinyl esters with a hydrophobic effect of general formula II

$$\begin{array}{c} O \\ \| \\ CH_2{=}CH{-}O{-}C{-}R_5 \end{array} \qquad (II)$$

wherein $R_5$ represents an alkyl group with 6 to 20 carbon atoms, are graft-polymerised on, whilst the weight ratio of the hydrogenated block copolymer to the compounds of general formula I to be polymerised in the first stage and the styrene which is optionally to be polymerised, and to the polymerisable heterocyclic monomers to be graft-polymerised on in the second stage and the vinyl esters of general formula II with a hydrophobic effect which are optionally to be graft-polymerised on, is 5—50 wt.-% to 49.5—85 wt.-% to 0.5—10 wt.-%, based on the total polymer.

2. Process as claimed in claim 1, characterised in that, in addition to the compounds of general formula I, alkyl esters of (meth)acrylic acid substituted by amino groups and/or polymerisable heterocyclic monomers are polymerised in the first stage.

3. Process as claimed in claim 2, characterised in that the alkyl esters substituted by amino groups and polymerised in addition to the alkyl esters of (meth)acrylic acid in the first stage have the general formula III

$$\begin{array}{c} R_1' \\ | \\ CH_2{-}C{-}COO{-}(CH_2)_nNR_3R_4 \end{array} \qquad (III)$$

wherein $R_1'$ represents hydrogen or methyl, $R_3$ and $R_4$ represent hydrogen or an alkyl group with 1 to 4 carbon atoms and n represents an integer from 2 to 4.

4. Process as claimed in claim 3, characterised in that, in the compound of general formula II, $R_3$ and $R_4$ represent methyl or ethyl and n represents 2.

5. Process as claimed in claim 1, characterised in that N-vinylpyrrolidone-2 and/or N-vinylimidazole are used as the polymerisable heterocyclic monomers graft-polymerised on in the second stage.